# EUROPEAN PATENT APPLICATION

(11) **EP 1 055 374 A1**
(43) Date of publication of application: **29.11.2000**
(21) Application number: 99201660.0
(22) Date of filing: 26.05.1999
(51) Int. Cl.: A23L 3/3571

(54) **Method to reduce oxidation in food products**

(71) Applicant: UNILEVER N.V., 3000 DK Rotterdam (NL)
(72) Inventor: The designation of the inventor has not yet been filed
(74) Representative: Joppe, Hermina L. P.

(57) **Abstract**

Food products may comprise oxidation sensitive ingredients. The invention provides a method to deoxygenate food products by the use of a dioxygenase enzyme.

## Description

### Field of the invention

The invention relates to a method of deoxygenating a food product, by adding an oxygen scavenging enzyme to said food product. The invention furthermore relates to food products comprising such enzymes.

### Background of the invention

Food products are often susceptible to oxidation. Oxygen dissolved in products or present in a head space of packing material can react with oxygen sensitive components of a product; for example with unsaturated fatty acids. The resulting products can impart an off flavour to the a food product, they may result in a colour change or they may cause structural changes in the product that are often not desired.

Especially food products comprising mono and/or polyunsaturated fatty acids are very sensitive to oxidation. Vegetable oils such as soy bean oil, and also fish oils contain substantial amounts of unsaturated fatty acids. In products comprising these unsaturated fatty acids, oxygen reacts, initiated by metal ions present, with unsaturated carbon-carbon bonds to form hydroperoxides. These hydroperoxides often decompose to low molecular weight organic compounds such as ketones and aldehydes that are known to cause off flavours.

It has been reported that oxidation of food products can be reduced for example by decreasing the storage temperature, by elimination of metal ions via scavenging or by addition of anti oxidants. However none of these methods provides the desired oxygen removal.

It has been proposed to use enzymes to scavenge and/or dissimilate oxygen.

EP-A-338,499 discloses the use of a water activated oxidoreductase enzyme to prevent oxidative attack upon the double bonds of fatty acids. The oxidoreductase can be selected from the group of enzymes that react with oxygen as an acceptor and act on a substrate group of one of the following : CH-OH, aldehyde or keto, CH-CH, CH-NH₂, CH-NH, nitrogeneous groups, sulfur containing groups, a heme group, diphenol or stucturally relates groups, or other types of substrates, whereby dioxygenases and monooxygenases are included. The preferred system is glucose oxidase in combination with catalase. However in this process hydrogen peroxide is formed as a transition-product, which can nonetheless lead to undesired by-products. Moreover this process is not very efficient as in the final reaction oxygen is formed.

Furthermore enzymatic deoxygenation with glucose oxidase has for example been described in WO 96/35768. Although glucose oxidase can be used to remove oxygen, as indicated above, its use has the disadvantage that hydrogen peroxide is produced in the oxygen removal reaction. Hydrogen peroxide can destruct food components and its formation is therefore undesired.
It has been suggested to add catalase for removal of hydrogen peroxide. This seems to be of limited use however as the reaction wherein hydrogen peroxide is then removed, generates oxygen.

The use of oxygen scavenging using enzymes is furthermore disclosed in WO-A-96/31133.
Said document discloses the addition of an effective amount of laccase to a food item. Laccase is said to be a protein of low specificity acting on both o- and p-quinols, whereby oxygen is reduced to water. Laccase is effective in oxygen removal but suffers the drawback that reaction products formed are reactive radical cations or quinones that can again produce undesired by-products in food products. Furthermore laccase is difficult to produce in a foreign host in high amounts.

Although several methods of oxygen removal have been proposed, there is still a need for improved methods for at least partial oxygen removal in products, especially food products, whereby the reaction products do not form undesired by products and whereby the removal is efficient. In particular the method should preferably be capable of deoxygenation of food products comprising triglyceride oils, especially if said oils comprise unsaturated fatty acids.

It is therefore an object of the present invention to provide a method of deoxygenating a food product using an oxygen scavenging enzyme, whereby there are no undesired reaction products formed such as radicals or hydrogen peroxide, and whereby oxygen removal is highly efficient.

It is a further object of the invention to provide food products that show no or reduced susceptibility towards oxidative degradation.

It has now been found that dioxygenases, which are enzymes capable of oxidising substrates by the build-in of one or more oxygen atoms into the substrate using molecular oxygen, are highly effective in oxygen removal in food products. Moreover no reactive species are formed during this reaction.

Moreover it has been found that as substrate for dioxygenases anti-oxidants can be used, which leads to a surprisingly good stabilisation of food products comprising oxidation sensitive compounds.

### Definition of the invention

According to the first aspect of the invention there is provided a method of deoxygenating a food product, by adding an effective amount of an oxygen dissimilating oxygenase enzyme to said food product, wherein said enzyme is a dioxygenase.
According to a second aspect, there is provided a food product comprising at least one dioxygenase enzyme, suitable to prevent oxidative deterioration of oxidation sensitive compositions.

### Detailed description of the invention

The invention relates to a method of deoxygenating a food product. This implies that a food product is at least partly deoxygenated by the method of the invention. Preferably at least 25 vol%, more preferred at least 50 vol%, most preferred 75 to 100 vol% of oxygen present is removed, compared to food products of similar composition wherein dioxygenase is absent. Oxygen present in the products may be for example dissolved or free, gaseous oxygen.

In the context of this invention food products are for example soup, dressing, sauce, margarine and margarine like products, spreadable products, ice cream, tea, teea based products, beverages, cheese, spreadable/poorable creams, mayonnaise, spreadable products like butter or peanut butter, cooking fats and oils, olive oil, bakery products, fruits, vegetables, pizza's and ready to use meals. These food products may be frozen food products.
Oil based food products can be pure oils, such as frying or cooking oils but can also be emulsions of water and fat or oil.

It has been found that the method according to the invention is especially suitable for at least partly deoxygenating food products which comprise triglyceride oils such as water and oil comprising emulsions. The dioxygenases maintain their oxygen scavenging activity in such an environment.
Triglyceride oils are esters of glycerol and fatty acids. Triglyceride oils are known to be susceptible to oxidation, which often leads to discolourization and off flavour development.
These undesired effects are even more present in triglyceride oils comprising mono and/or poly unsaturated fatty acid residues. Therefore the invention is especially related to food products comprising a fat blend, which comprises at least 30 wt% on total fat blend, more preferred at least 45 wt% of mono and/or poly unsaturated fatty acids.
Examples of triglyceride oils comprising mono and/or poly unsaturated fatty acids are soy bean oil, sunflower oil and fish oil.

Triglyceride oils can be of any source such as dairy fat, vegetable fat, fish oil or a combination thereof. Preferred triglyceride oils have a high content of mono and/or poly unsaturated fatty acid residues as these fats are considered to have a beneficial effect on cholesterol levels.
Triglyceride oils can for example be selected from the group consisting of sunflower oil, safflower oil, palm oil, palm kernel oil, illippe oil, linseed oil, rapeseed oil, linola oil, soy bean oil, coconut oil or combinations thereof. Highly preferred are triglyceride oils comprising omega-3-unsaturated fatty acids and/or gamma linoleic acid.

Triglyceride oil levels in prefered food products according to the invention can range from 10 to 90 wt% fat, more preferred from 10 to 70 wt% fat, most preferred from 10 to 40 wt% triglyceride oils.
Dressings may for example comprise from 0 to 60 wt%, preferably from 5 to 20 wt% triglyceride oils; margarine or margarine like products may for example comprise from 20 to 80 wt% triglyceride oils and mayonnaise of mayonnaise like products may for example comprise from 60 to 90 wt% triglyceride oils.

The terms fats and oils are used interchangeably in this document. Both by fat and oil is meant a triglyceride composition or a non-toxic material having properties comparable with those of triglycerides, which material may be indigestible, such as for example esters of fatty acids and sugars.

According to the invention oxygen is scavenged and dissimilated by dioxygenases.
Dioxygenases are a subclass of oxygenases which are enzymes that facilitate the incorporation of one (monooxygenases) or two (dioxygenases) oxygen atoms
into organic substrates. In monooxygenases, the non-incorporated oxygen atom is reduced to water either by an additional two electron reductant in the case of external monooxygenases or by the substrate itself in the internal monooxygenases.
In dioxygenases either both oxygen atoms are incorporated into a substrate or one oxygen atom is incorporated into a substrate and the second into an additional cofactor (Chem Rev Nov 1996, vol 96, No 7, pages 2275-76).

Dioxygenases may comprise copper or iron in their active site. Copper containing dioxygenases are preferred for the method according to the invention.

Preferred enzymes are quercetinase (enzyme capable of oxidation of molecules with quercetin type of structure, and catechinase (enzyme capable of oxidation of molecules with catechin type of structure). Also suitable are other enzymes such as catechol dioxygenase, and protocatechuate dioxygenase.

According to another embodiment, a mixture of two or more different dioxygenases is used. For example a combination of a monooxygenase and a dioxygenases can be applied, or a mixture of for example quercetinase and catechinase.

The activity of enzymes with dioxygenase activity is determined by for example the quercetinase activity assay, which is illustrated in the examples.

Dioxygenases can for example be isolated from soybean, potato tuber or tomato (lipoxygenases).

Suitable enzymes with dioxygenase activity are for example those secreted by micro-organisms, such as fungi, yeast, bacteria. Preferably the dioxygenase is a fungal dioxygenase of extracellular origin.

A secreted dioxygenase may be obtained from fermentation of the micro-organism under any suitable condition, such as fermentation in a rich or minimal culture medium, via induction of the micro-organism via certain organic molecules or building blocks of those molecules, by application of stress conditions during fermentation, or combinations of these measures.

The dioxygenase may be of "natural orgin" or can be one that is produced by a method comprising genetic modification of a micro-organism such as a fungus, such that over expression of the desired dioxygenase is achieved. Common, well known modification techniques can be applied.

Quercetinase is for example obtainable from Aspergillus japonicus, Aspergillus flavus, Dipothe eres, Neuspora crassa, Diplodia gossypin, Penicillium minioluteum, Penicillium rocforteii, Aspergillus awamori, Aspergills niger, Aspergillus foetidus, Aspergillus soyae and Aspergillus oryzae.
Catechinase can for example be obtained from Aspergillus japonicus, Neurospora crassa, Diplodia gossypin, Diaporthe eres and Trichoderma reesei.

It is considered advantageous that both quercetinase and catechinase can be over-expressed in *Aspergillus awamori*.

Preferably according to the invention, a suitable substrate for a dioxygenase enzymes is incorporated in the food product.

Substrates are preferably those that are preferred for the specific enzyme.
More preferred said substrates are stable products that are stable also in their oxidised form. Most preferred substrates are anti-oxidants.
It has been found that the combination of anti-oxidants as substrate, with a dioxygenase enzyme, results in an enhanced positive effect in oxygen removal and stabilisation of food products comprising oxidation sensitive ingredients. Without wishing to be bound by any theory applicants believe that this effect is caused by the mechanism that on the one hand oxygen is scavenged and that on the other hand, simultaneously radicals that have been formed in the short time period that oxygen was present, are neutralised immediately by the anti-oxidants.

Examples of suitable substrates are catechin, quercetin, kaemferol, myricetin, or other flavonoids.
If catechinase is added, the addition of catechin as substrate is highly preferred. If quercetinase is added, the addition of quercetin and/or kaemferol as substrate is highly preferred.

It will be appreciated that it is also possible to add combinations of two or more suitable substrates in the food products that are deoxygenated according to the invention.

Preferably if a mixture of dioxygenases is used, the substrates added are adapted to the composition of this enzyme mixture. It is for example possible that as a substrate a compound that reacts with all dioxygenases present is used. It is also possible to add two or more substrates whereby each substrate is a specific substrate for one of the dioxygenases present. For example a mixture of quercetin and catechin can serve as substrate.

Highly preferred are substrates comprised in components of natural origin or concentrates comprising such substrates. Especially preferred the substrates are comprised in (instant) green tea, herbs (especially parsley), vegetables (especially broccoli, spinach, moroheiya), wine, onions, fruit juice or concentrates or extracts thereof. It will be appreciated that combinations of the indicated compositions can also be applied.
Instant green tea can for example be prepared by adding to tea leaves boiled water, incubating for about 10 min., filtering through a coarse filter, drying the solution that is obtained.
Instant green tea generally comprises about 30-40 wt% catechins, 5-10 wt% protein, 5-10 wt% cafeine, 10-15 wt% carbohydrates, 5-15 wt% organic acids and less than 5 wt% flavonols and flavonol glycosides.

The amount of substrate that is added to a product can be varied and may depend on the type of dioxygenase used, the pH of the product, salt concentration, oil content in the product and the volume of headspace above a product.

The desirable ranges for an individual substrate may be found by running a test series combining various concentrations of a substrate with varying concentrations of a dioxygenase and judging the achieved deoxygenation effect and at the same time having a panel tasting or smelling if the food product is acceptable. For example products that result from oxidation of unsaturated fatty acids, are often volatiles with an undesired off flavour.

For example if catechin or quercetin is used as substrate, their preferred amount (on total product weight) is from 0.01 to 20 wt%, more preferred 0.1 to 10 wt%, even more preferred from 1 to 5 wt%.

It is believed to be within the capabilities of the skilled person to determine the amount of dioxygenase that is such that oxygen removal is effective. The phrase "effective amount of dioxygenase" is used to indicate that the amount should be such that oxygen is at least partly removed. For example such that no off flavour due to oxidised compounds is present upon storage. This off flavour can be determined by a test panel.

Preferably the amount of dioxygenase added is in the range of from 5 to 50.000 units of dioxygenase activity per kilogram food product, more preferred from 10 to 5.000 units per kilogram food products, even more preferred from 10 to 2.000 units per kilogram of food product, even more preferred from 20 to 1.000 units per kilogram food product, most preferred from 50 to 500 units per kilogram food product; whereby units are defined as the amount of enzyme required to convert 1 µmol of substrate within 1 minute. It has been found that below the amount of 5 units per kilogram food product, the activity of the dioxygenase is fairy low and product deterioration still takes place. Higher amounts than about 50.000 units per kilogram food product are possible but not required, as they give no additional effect.

The method can be applied in any product, but preferred are food products wherein the pH is from 3 to 9. It has been found that dioxygenases are very suitable for use in acidic food products of pH from about 4 to 6. This is considered advantageous for microbiological stability of said food products. Most preferred the pH of the food products is within 0.5 units from the pH optimum of the specific dioxygenase involved.
If catechinase and/or quercetinase is used, the pH of the food products is most preferred from 5 to 6.

It has been found that the method according to the invention is especially suitable for use in food products comprising a relatively high salt content for example in the range of from 0.5 to 2.5 wt% sodium chloride. Such relatively high salt concentrations are sometimes desired for taste or preservation purpose.
This implies an extra advantage in the use of the method according to the invention. Many prior art methods, such as deoxygenation using laccase, show reduced activity in food products comprising relatively high salt concentrations.

In the method according to the invention, dioxygenase can be added to food products in any possible form. The dioxygenase can for example be added as such, or in solution, in concentrated or diluted form, in a buffer system, in a dried form or immobilised on a carrier material.
It is also possible to use an encapsulated dioxygenase as long as either the capsule is broken down in the product or the capsule is permeable for the substrate and oxygen; such that the dioxygenase can perform its function. Care should be taken that all methods of addition comprise food grade material. Preferably carrier or encapsulation material if used, is digestible.
Encapsulated dioxygenase may for example be applied to "protect" the dioxygenase in a heat treatment such that the dioxygenase activity is maintained also if a heat treatment is applied.

In a second aspect the invention relates to food products comprising at least one dioxygenase enzyme, suitable to prevent oxidative deterioration of oxidation sensitive compositions.
Preferably said food products additionally comprise a suitable substrate for the dioxygenase, in a preferred amount of from 0.01 to 20 wt%, more preferred 0.1 to 10 wt%, even more preferred from 1 to 5 wt%.

Preferably food products according to the invention are storage stable. This implies that among others, products according to the invention preferably do not show colour deterioration or off flavour development such as increased rancidity of the food products in the course of storage. Preferred products are storage stable for at least 4 weeks, preferably at least 10 weeks, more preferred around 6 months. This implies that the added dioxygenase or dioxygenase mixture preferably retains its oxygen scavenging activity for at least 4 weeks, more preferred at least 7 weeks, most preferred at least 10 weeks. It has been found that storage stability can be assured if the dioxygenase (mixture) retains at least 25%, preferably at least 50 % of it's activity after 4 weeks, more preferred after 7 weeks.
Most preferred the dioxygenase activity after 7 weeks is 80-100 % of the original activity that was added to the product in the form of a certain amount of dioxygenase.

In addition to the above mentioned ingredients, food products according to the invention may optionally contain further ingredients suitable for use in these products. Examples of these materials are sugar or other sweetener materials, EDTA, spices, salt, bulking agents, egg yolk, emulsifiers, stabilising agents, flavouring materials, colouring materials, acids, preserving agents, vegetable particles, herbs etc.

Further characteristics of these food products are described-above.

Food products according to the invention can be prepared by any suitable method.
Measures should however be taken that the dioxygenase (mixture) added is not inactivated due to processing conditions.
For example if a heat treatment step is used in the preparation of the food products the dioxygenase (mixture) is preferably added after said heat treatment. This applies especially if temperatures during heat treatment are above 50 °C, especially above 60 °C.

In a preferred preparation method, dioxygenase is added just before packaging at a temperature below 50 °C.

For example margarines and frying fats can be prepared by using a standard votator^{tm} process.

A preferred process to prepare a margarine (like) product comprises the steps of emulsification of aqueous phase in a melted fatty phase, mixing the formed emulsion to ensure uniformity, cooling said emulsion in a shear unit, for example a tubular swept surface heat exchanger, to obtain crystallisation, working the resulting partially crystallised emulsion in for example a pin stirrer unit and packaging the resulting fat continuous product. The dioxygenase (mixture) is preferably added just before packaging. Optionally before packaging the emulsion is subjected to a resting treatment to increase the final product consistency. Said resting is for example carried out in a resting unit or a quiescent tube. Optionally the aqueous phase is pasteurised before mixing it with a fatty phase.

Water continuous cheese products like fresh cheese are for example obtained by a process comprising the steps of preparing a cream composition comprising an oil in water emulsion, subjecting this composition to acidification, concentrating the composition under whey removal, applying a homogenising treatment to the obtained concentrate to obtain the final product. The dioxygenase (mixture) is preferably added just before packaging.

A water continuous spreadable product can for example be prepared by the method indicated above for fresh cheese, whereby optionally the whey removal and concentration step are left out.

Dressings comprising for example from 0 to 60 wt% fat can suitably be prepared by preparation of an aqueous phase comprising for example flavour components, preservatives, thickeners and emulsifiers. A fatty phase comprising a triglyceride oil such as sunflower oil, or a fat replacer, can be added to the aqueous phase under stirring. The obtained mixture is preferably thoroughly mixed to obtain a pre-emulsion and then processed in a low shear device such as a colloid mill. A water continuous gel dispersion then results. Dioxygenases or mixtures thereof are preferably added after the colloid mill treatment.
In order to prevent possible particle disruption, optional herb, vegetable and/or spice pieces are preferably added after formation of the gel dispersion.

The invention is now illustrated by the following examples.

### Examples

### Determination of dioxygenase activity for quercetinase:

Dioxygenase activity was determined from the oxygenation of quercetin by oxygen. The yellow colour of quercetin was followed spectrophotometrically at 367 nm. The analytical conditions were:
12 µM quercetin (in 1% DMSO)
30 mM MES buffer pH 6.0
temperature: 25 °C
reaction time: 5 min

The specific activity of the quercetinase is expressed in quercetinase units (U) defined as µmol quercetin oxidized /min per mg quercetinase. 1 unit of quercetinase activity is the amount of enzyme that catalyses the conversion of 1 µmol quercetin per minute under the indicated conditions. The molair extinction coefficient is 21.1 mM ⁻¹ cm ⁻¹ (λ 367 nm, 25 °C, 1cm cuvet).
The activity of quercetinase used was: 332 U/mg

### Determination of dioxygenase activity for catechinase:

The production of colour in the UV region from catechin by the oxidation reaction catalyzed by catechinase was photometered at 250 nm. The analytical conditions are:
0.1 mM catechin (in 1% ethanol)
25 mM phosphate buffer pH 5.5
temperature: 25 °C
reaction time: 5 min

The specific activity of the catechinase was expressed in catechinase units (U) defined as absorption increase measured at 250 nm per min per mg catechinase. 1 unit of catechinase activity is the amount of enzyme that catalyses the conversion of catechin which leads to an absorption increase of 1.00 at 250 nm of 1.00 per minute under the indicated conditions.
The activity of catechinase used was: 24 U/mg

### Determination of Laccase activity

Laccase activity was determined from the oxidation of 2,2'-azinobis(3-ethylbenzothiazoline-6-sulfonate) (ABTS) by oxygen. The greenish blue colour produced by the oxidation reaction was photometered at 414 nm. The analytical conditions were:
2 mM ABTS
0.1M phosphate buffer pH 5
30°C
reaction time 5 min

The specific activity of the laccase is expressed in laccase units (U) defined as: 1 unit of laccase activity is the amount of enzyme that catalyses the conversion of 1 µmol ABTS per minute under the indicated conditions (µmol ABTS/min.mg laccase).
The molair extinction coefficient of ABTS is 31.1 mM ⁻¹ cm ⁻¹ (λ 414nm, 25 °C, 1cm cuvet).
The activity of laccase used was: 23 LACU/mg

### Determination of oxygen levels in food products

Oxygen levels were determined using a oxygraph (oxygen electrode, YSI biological oxygen monitor, penrecorder, waterbath 25°C.) calibrated with air-saturated water.

### Example 1

Oxygen removal activity of quercetinase and catechinase was determined.
Products A and B were prepared under atmospheric pressure. Product A was 25 mM acetate buffer at pH 5 comprising 2 wt% Tween^{tm} 20. Product B was a water and oil emulsion comprising 60 wt% olive oil which was saturated with air, 38 wt% 25 mM acetate buffer at pH 5 and 2 wt% Tween^{tm} 20 as emulsifier. The emulsion was prepared by mixing at 25 °C. Both A and B were at 25 °C.

To both A and B were added 5.6 mg/l catechinase and 0.14 mg/l quercetinase (in the form of a solution of the respective dioxygenase in 30 mM MES buffer pH 6). For catechinase instant green tea (IGT, ex Lipton) was added in an amount of 3 g/l and in a second experiment catechine was added in an amount of 1 mmol/l (0.3 g/l).

For the sample with quercetinase two experiments were carried out; one in which quercetin was added as substrate in an amount of 1 mmol/l (0.3 g/l) and one experiment in which kaempferol was added in an amount of 1 mmol/l (0.3 g/l).

Oxygen uptake (removal) was determined by using an oxygen electrode.

The results are summarised in table 1.

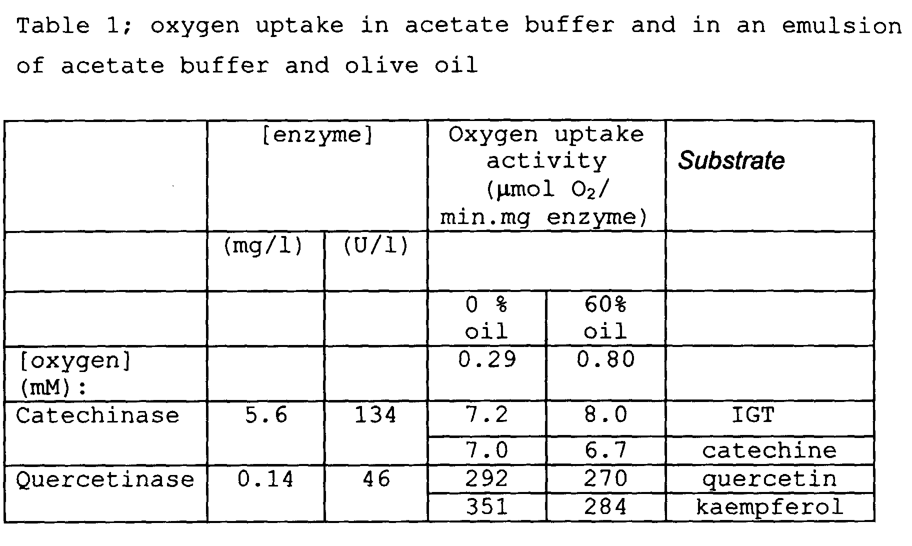

It is concluded that both catechinase and quercetinase are capable of deoxygenating acetate buffer and an emulsion of acetate buffer and olive oil.

### Example 2

Deoxygenation of product A and B as disclosed in example 1 was studied except that 0.5 wt% NaCl was added to some of the samples. The amount of quercetinase used was 0.14 mg/l having a specific activity of 332 U/mg.
In comparative example C2 Laccase (Novo sp 710) was added to product A and B in an amount of 4.7 mg/l of laccase having a specific activity of 23 U/mg.

For the sample with quercetinase, quercetin was added as substrate in an amount of 1 mmol/l or 0.3 g/l. For the sample with laccase, instant green tea (IGT) was added as substrate in an amount of 0.3 g/l.

The results are shown in table 2.

**Table 2**

| | Oxygen uptake activity of the enzyme (µmol O₂/min.mg) | | | | substrate |
|---|---|---|---|---|---|
| | 0 % oil | | 65 % oil | | |
| | 0% NaCl | 0.5% NaCl | 0 % NaCl | 0.5% NaCl | |
| Quercetinase (46 U/l) | 277 | 272 | 243 | 253 | quercetin |
| Comparative example C2 Laccase Novo (108 U/l) | 8.7 | 3.2 | 9.8 | 1.5 | IGT |

It is concluded that quercetinase retains at least 98% of it's activity if salt is added, whereas the activity of laccase is reduced to 36% of the activity in the absence of salt and even to only 18% if oil is present in addition to salt.

### Example 3

The effect of quercetinase and catechinase and their substrates were tested in 70% fish oil emulsions in water, incubated at 35 °C. Rancidness (fish off flavour) was determined by a panel of 7 people, trained in smelling fish oil samples. The samples were smelled after 18 hours incubation and scored on a scale of 1-10.
- 1:: no off flavour
- 3:: small perception of off flavour
- 5:: perception of off flavour
- 7:: strong off flavour perception
- 9:: very strong off flavour perception

As comparative example C3A laccase was added to one of the emulsions and further treated equally to the samples of example 3. As comparative example C3B, no enzyme was added (blank).

The scores are shown in table 3.

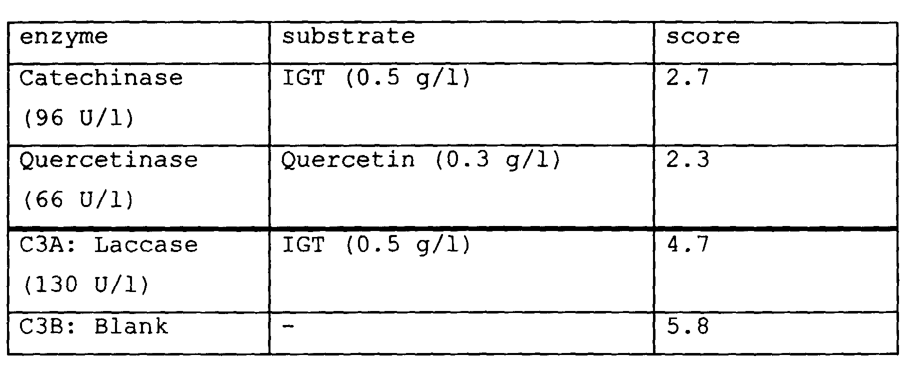

It is concluded that the effect on off flavour reduction is better for dioxygenases than for laccase.

### Example 4

The activity of catechinase and quercetinase in several food products was determined after a storage time of 25 and 50 days. Emulsions of oil in water were prepared in 25 mM acetate buffer pH 5, comprising 2 wt% Tween 20.
The amount of catechinase added was: 84 µg/ml
The amount of quercetinase added was: 2.1 µg/ml
Storage temperature was at 25 °C or 4 °C.
The rest-activity of catechinase was measured with 100 µM catechin in 25 mM acetate buffer pH 5 at 250 nm.
The rest-activity of quercetinase was measured with 12 µM quercetin in 25 mM acetate buffer pH 5 at 367 nm.
The activity of quercetinase was: 340 U/mg
The activity of catechinase was: 22 U/mg

In all four samples comprising catechinase (0 and 25 wt% wt% oil, 25 °C and 4 °C), the activity after 50 days had not diminished significantly. The remaining catechinase activity was around 100 % for all samples.

The product compositions and results are shown in table 4 for quercetinase.

**Table 4**

| Quercetinase | | | | |
|---|---|---|---|---|
| Product composition | Storage temperature | Activity directly after preparation | Activity after 25 days | Activity after 50 days |
| 0 wt% oil | 25 °C | 100 % | 76 % | 78 % |
| 25 wt% oil | 25 °C | 100 % | 85 % | 62 % |
| 0 wt% oil | 4 °C | 100 % | 86 % | 76 % |
| 25 wt% oil | 4 °C | 100 % | 89 % | 75 % |

### Example 5

Quercetinase activity was determined using a oxygraph (oxygen electrode, YSI biological oxygen monitor, penrecorder, waterbath 25°C.) at varying pH ranging from 3.5 to 5.
pH dependence of quercetinase was determined in an emulsion comprising 12.5 wt% olive oil and 50 mM citrate buffer at varying pH. 2 wt% Tween-20 was added as emulsifier.
Substrate: 1 mM quercetin (0.3 g/l).
The decrease in oxygen was measured.
The activity of quercetinase at reduced pH compared to pH 5, is shown in table 5.

**Table 5**

| results example 5 | | |
|---|---|---|
| PH | activity Quercetinase [µmol O₂/min·mg] | % activity Quercetinase |
| 3.5 | 298 ± 3 | 92 |
| 4 | 319 ± 19 | 98 |
| 5 | 324 ± 7 | 100 |

### Example 6

pH dependence of catechinase was determined in an emulsion comprising 12.5 wt% olive oil and 50 mM phosphate buffer at varying pH. 2 wt% Tween-20 was added as emulsifier.
Substrate: 0.3 wt% instant green tea (from Unilever) Temperature was maintained at 25 °C. Results are summarised in table 6.

**Table 6**

| results example 6 | | |
|---|---|---|
| PH | activity Catechinase [µmol O₂/min·mg] | % activity Catechinase |
| 3.5 | 15.2 | 32 |
| 4 | 8.6 | 57 |
| 5 | 4.8 | 100 |

### Example 7

The effect of quercetinase and the substrate quercetin on off-flavour development was tested in 40% oil (SA/LN 85/15) emulsions in demi water, prepared with an Ultra-Turrax. Tween 60 was used as an emulsifier. The samples were incubated for 24 hr at 40 °C and then further incubated at 60°C. After 0, 200 and 300 hr the off flavour was measured by GC analysis. The volatiles used to follow lipid oxidation by static headspace GC are : Acetaldehyde, Propenal, 2t-Butenal, 1-Pentene-3-ol, Pentanal, Pentenal and Hexanal. The peak area of the volatiles of the samples are given in table 7. This area corresponds to the amount of volatile compound that is formed. These compounds if present may impart off flavour to a food product. The amount of quercetinase used was 17 mg/l and the amount of quercetine used was 6 g/l.

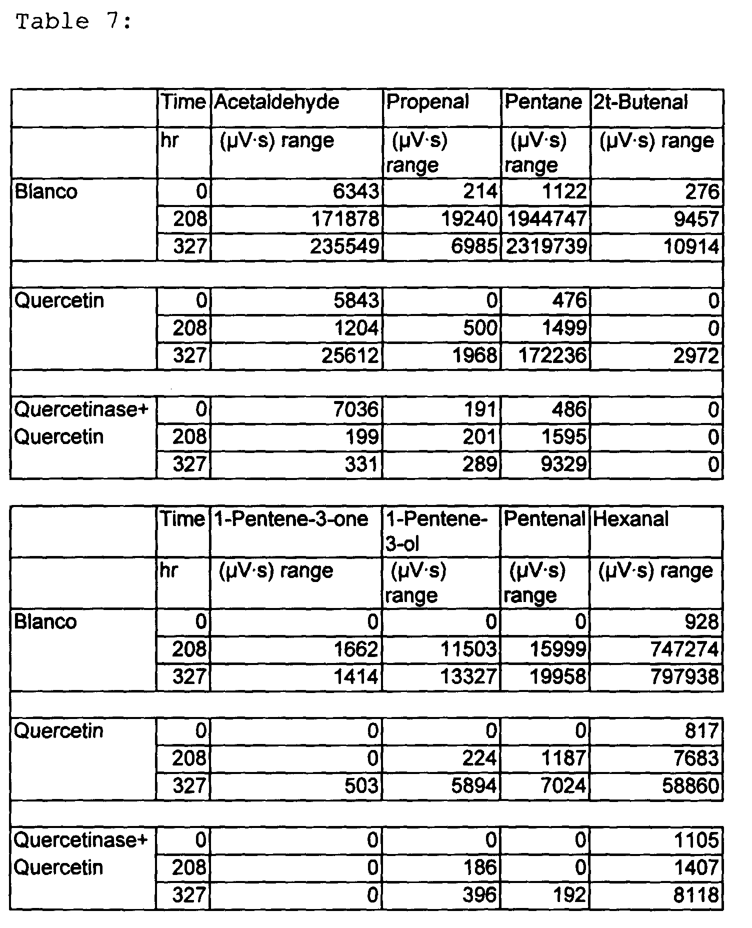

It is concluded that the effect on off flavour reduction is effective for the anti-oxidant, quercetine, and even more effective was the combination of quercetine and quercetinase. While in reference products, free of dioxygenase, the volatiles increased in time, the combination of quercetinase and quercetin reduced their production very effectively (97-100%) and almost no off flavours were produced.

## Claims

1. Method of deoxygenating a food product, by adding an effective amount of an oxygen dissimilating oxygenase enzyme to said food product, characterised in that said enzyme is a dioxygenase.

2. Method according to claim 1, characterised in that said dioxygenase is quercetinase or catechinase.

3. Method according to any of claims 1-2, characterised in that the food product comprises triglyceride oil.

4. Method according to claim 3 characterised in that said triglyceride oil is a fat blend, which fat blend comprises at least 30 wt% on total fat blend, more preferred at least 45 wt% of mono and/or poly unsaturated fatty acids.

5. Method according to any of claims 1-4 characterised in that said product comprises a substrate for dioxygenases.

6. Method according to claim 5, characterised in that said substrate is an anti-oxidant.

7. Method according to any of the preceding claims, characterised in that said substrate is comprised in a natural composition for example (green) tea, herbs (especially parsley), vegetables (especially broccoli, spinach, moroheiya), wine, onions, fruit juice or concentrates or extracts thereof.

8. Food product comprising at least one dioxygenase enzyme, suitable to prevent oxidative deterioration of oxidation sensitive compositions.

9. Food product according to claim 8 characterised in that said food product comprises an antioxidant suitable as a substrate for said dioxygenase enzyme, such as catechine, quercetine.

10. Food product comprising a triglyceride oil comprising unsaturated carbon-carbon bonds, and a stabilising amount of at least one dioxygenase enzyme, suitable to prevent oxidative attack upon said double carbon-carbon bonds.

11. Food product according to any of claims 8-10, wherein said food product is selected from the group comprising soup, dressing, sauce, margarine and margarine like products, spreadable products, ice cream, tea, teea based products, beverages, cheese, spreadable/poorable creams, mayonnaise, spreadable products like butter or peanut butter, cooking fats and oils, olive oil, bakery products, fruits, vegetables, pizza's and ready to use meals.
